# EUROPÄISCHE PATENTSCHRIFT

(11) **EP 0 493 780 B1**
(45) Veröffentlichungstag und Bekanntmachung des Hinweises auf die Patenterteilung: **29.11.1995**
(21) Anmeldenummer: 91122128.1
(22) Anmeldetag: 23.12.1991
(51) Int. Cl.: C08G 59/50, C09D 163/02, C09D 5/03, C08G 59/40, C09D 163/00

(54) **Härter für die Herstellung von Mattlacken auf Basis von Epoxidharzen**
Hardener for the preparation of mat coatings basing on epoxy resins
Durcisseurs pour la préparation des revêtements mats à partir des résines époxy

(30) Priorität: 29.12.1990 DE 4042191
(43) Veröffentlichungstag der Anmeldung: 08.07.1992
(73) Patentinhaber: SKW Trostberg Aktiengesellschaft, 83308 Trostberg (DE)
(72) Erfinder: Hammer, Benedikt, Dr., W-8223 Trostberg (DE); Güthner, Thomas, Dr., W-8223 Trostberg (DE); Hintermaier, Helmut, Dr., W-8223 Trostberg (DE)
(74) Vertreter: Huber, Bernhard, Dipl.-Chem.

(56) Entgegenhaltungen:
- DE-A- 2 324 696
- DE-A- 3 610 757
- DATABASE STN, FILE CA Chemical Abstracts, Band 106, Nr. 14, 6. April 1987, Zusammenfassung Nr. 103269f; & JP-A-61218578 (SHIKOKU CHEMICALS CORP.) 29.09.1986 in Verbindung mit Database STN, file Reg, Reg nos.: 107140-47-6, 107-140-46-5, 107-140-45-4; & PAJ, Band 011, Nr. 60 (C-405), 24. Februar 1987

## Beschreibung

Die Erfindung betrifft Härter für die Herstellung von Mattlacken auf Basis von Epoxidharzen sowie Verfahren zur Härtung entsprechender Epoxidharze.

Zur Herstellung von matten Überzügen, die hauptsächlich zu dekorativen Zwecken in verstärktem Maße Anwendung finden, werden heute üblicherweise wärmehärtende Pulverlacksysteme auf Epoxidharzbasis eingesetzt.

Da man bei der Verwendung der üblichen Härter auf Basis von Aminen oder Säureanhydriden nur Überzüge mit mehr oder weniger stark glänzendem Aussehen erhält, ist man gezwungen, auf spezielle Mattlackhärter zurückzugreifen. Ein wesentliches Problem bei diesen Härtern ist, daß sie matte und gleichmäßige Überzüge erzeugen sollen, welche außerdem eine ausreichende Haftung auf dem jeweiligen Untergrund aufweisen müssen.

Die einzigen Härtersysteme, welche diese Anforderungen bisher in zufriedenstellender Weise erfüllen, sind Salze von 2-Phenylimidazolin mit Polycarbonsäuren mit mindestens drei Carboxylgruppen, wie sie in der DE-PS 23 24 696 beschrieben sind.

Als Polycarbonsäuren werden bevorzugt aromatische Carbonsäuren, wie z.B. Pyromellithsäure eingesetzt. Diese Säuren haben jedoch den Nachteil, sehr teuer zu sein und nur in begrenztem Maße zur Verfügung zu stehen. Außerdem müssen die entsprechenden Salze durch Umsetzung der Säuren mit dem 2-Phenylimidazolin in geeigneten Lösemitteln eigens hergestellt werden, was einen gewissen technischen Aufwand erfordert.

Der Erfindung liegt daher die Aufgabe zugrunde, Härter für die Herstellung von Mattlacken auf Basis von Epoxidharzen zu entwickeln, welche die genannten Nachteile des Standes der Technik nicht aufweisen, sondern relativ einfach herzustellen sind und gleichzeitig gute anwendungstechnische Eigenschaften aufweisen.

Diese Aufgabe wird erfindungsgemäß gelöst durch einen Härter, der aus einer Mischung von
a) 2-Imidazolin-Derivat mit einem Schmelzpunkt > 60°C und
b) Cyanursäure sowie gegebenenfalls Antibackmittel oder/und Stabilisator besteht.

Es hat sich nämlich überraschend gezeigt, daß mit Hilfe dieses Härters glatte und gleichmäßige Mattlacke mit guter Haftung und hervorragendem Matteffekt erhältlich sind.

Da die beiden Komponenten 2-Imidazolin-Derivat mit einem Schmelzpunkt > 60°C und Cyanursäure (2,4,6-Trihydroxy-1,3,5-triazin) als physikalische Mischungen vorliegen, kann eine aufwendige Reaktion zur Salzbildung entfallen.

Das 2-Imidazolin-Derivat ist vorzugsweise eine Verbindung der allgemeinen Formel I 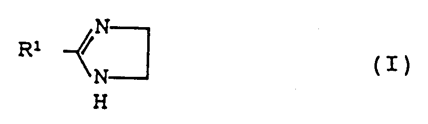
in der R¹ einen Alkylrest mit 10 bis 20 Kohlenstoffatomen, 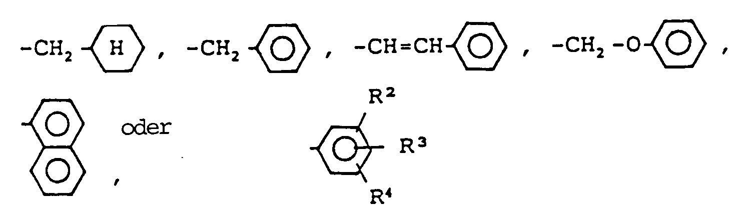
bedeutet und
R², R³, R⁴ unabhängig voneinander jeweils H, eine C₁-C₄-Alkylgruppe, -NO₂, -Cl, -OCH₃ oder 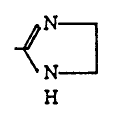
bedeuten.

Das Verhältnis der beiden genannten Komponenten kann in weiten Grenzen variiert werden, doch hat es sich als besonders vorteilhaft erwiesen, das Gewichtsverhältnis von 2-Imidazolin-Derivat zu Cyanursäure auf 90:10 bis 20:80 einzustellen, weil hierbei Mattlacke mit besonders ausgezeichneten Eigenschaften erhalten werden. Zwar ist es grundsätzlich möglich, den Anteil an 2-Imidazolin-Derivat über 90 Gew.-% auszuweiten, doch läuft man hierbei Gefahr, bei bestimmten Epoxidharzformulierungen relativ hohe Glanzgrade zu erzielen.

Wenn der Anteil der Cyanursäure im Gemisch über 80 Gew.-% liegt, kann es vorkommen, daß die Härtung bzw. Haftfestigkeit dann nicht mehr optimal ist.

Mit Hilfe des erfindungsgemäßen Zweikomponenten-Härters ist es durch Variation der Gewichtsverhältnisse in weiten Grenzen möglich, den Glanzgrad bzw. die Härtungseigenschaften zu steuern.

Zur Verbesserung der anwendungstechnischen Eigenschaften kann im Rahmen der Erfindung der Härter noch spezielle Zusätze enthalten. So empfiehlt es sich, dem Härter zu Verbesserung der Fließeigenschaften noch Antibackmittel wie z.B. Kieselsäuren zuzusetzen. Hierbei sind gefällte oder pyrogene Kieselsäuren, die üblicherweise in einer Menge von 0,2 bis 5 Gew.-%, bezogen auf das Gewicht des Härters, eingesetzt werden, gleichermaßen gut geeignet.

Außerdem kann der Härter noch Stabilisatoren enthalten, welche die Salzbildung zwischen dem 2-Imidazolin-Derivat und der Cyanursäure insbesondere bei erhöhter Temperatur unterbinden. Hierbei haben sich insbesondere Wachse, wie z.B. Polyethylenwachse, aber auch Stearate, wie z.B. Zinkstearat als besonders vorteilhaft erwiesen, wobei Mengen von 0,5 bis 5 Gew.-%, bezogen auf das Gewicht des Härters, zweckmäßig sind.

Die erfindungsgemäßen Härter sollten zweckmäßigerweise in möglichst feinteiliger Form zum Einsatz kommen, um eine gleichmäßige Verteilung zu erleichtern und eine optimale Wirkung zu entfalten. Die Teilchengröße der Härter sollte deshalb < 100 »m, vorzugsweise < 50 »m betragen.

Die Herstellung des erfindungsgemäßen Härters kann in technisch einfacher Weise durch intensives Mischen der beiden Komponenten und gegebenenfalls der Zusätze und anschließendes Vermahlen der Mischung auf die gewünschte Teilchengröße erfolgen, wobei auf die üblichen technischen Methoden und Vorrichtungen zurückgegriffen werden kann. Man kann aber stattdessen auch die zuvor entsprechend gemahlenen Einzelkomponenten zusammenmischen.

Die auf diese Weise hergestellten Stoffgemische sind für die Härtung von Epoxidharzen speziell bei der Herstellung von Mattlacken geeignet. Als Epoxidharze kommen die üblichen Feststoffharze in Frage, die im Mittel mehr als eine 1,2-Epoxidgruppe und einen unteren Aufschmelzpunkt von > 40°C aufweisen. Diese Epoxidharze können gesättigt oder ungesättigt, aliphatisch, cycloaliphatisch, aromatisch oder heterocyclisch sein und evtl. Substituenten wie Halogene, Phosphor und Hydroxylgruppen etc. enthalten.

Um die besonderen erfindungsgemäßen Vorteile zu erzielen, empfiehlt es sich, die vorgeschlagenen Härter in einer Menge von 1 bis 30 Gew.-%, insbesondere 5 bis 20 Gew.-%, bezogen auf das Gewicht des Epoxidharzes, einzusetzen.

Für die Formulierung der Pulverbeschichtungen können dem Epoxidharz neben dem erfindungsgemäßen Härter noch weitere Zusatzstoffe, wie z.B. Pigmente, Füllstoffe und gegebenenfalls Farbstoffe oder Verlaufshilfsmittel etc. in den üblichen Mengen zugesetzt werden.

Dieses Pulverlackgemisch wird vor dessen Anwendung zusammen extrudiert und daraufhin auf die gewünschte Teilchengröße vermahlen.

Anschließend wird der feinteilige Pulverlack auf die zu lackierenden Gegenstände aufgesprüht und die Härtung bei Temperaturen von 140°C bis 220°C, vorzugsweise 180°C bis 200°C vorgenommen.

Die auf diese Weise erzeugten Mattlacke weisen die gewünschten geringen Glanzgrade und gute Haftfestigkeiten auf, bilden glatte und gleichmäßige Oberflächen und zeigen auch nach längerer Einbrennzeit keine Vergilbungserscheinungen.

Aufgrund dieser hervorragenden anwendungstechnischen Eigenschaften der erhaltenen Mattlacke, sowie ihres einfachen Zugangs sind die erfindungsgemäßen Härter besonders gut für den technischen Einsatz geeignet.

Die nachfolgenden Beispiele sollen die Erfindung näher erläutern.

### Beispiele

Die erfindungsgemäßen Härter wurden durch Mischen von 2-Imidazolin-Derivat und Cyanursäure in dem jeweiligen Verhältnis und gegebenenfalls durch Zusatz von Antibackmittel und Stabilisatoren sowie durch Vermahlen der gesamten Mischung auf < 50 »m hergestellt.

Diese Härtergemische wurden dem Epoxidharz zusammen mit gegebenenfalls weiteren Additiven, wie Pigmente, Füllstoffe etc., zugesetzt, nach dem Mischen extrudiert und anschließend auf eine Teilchengröße < 100 »m vermahlen. Die fertige, feinteilige Pulverbeschichtung wurde daraufhin auf Stahlbleche (Größe 10 x 10 x 0,5 cm) in einer Schichtdicke von ca. 0,04 mm aufgesprüht und bei den angegebenen Temperaturen ausgehärtet. Die auf diese Weise erhaltenen Mattlacke wurden hinsichtlich Glanzgrad, Haftfestigkeit, Oberflächenbeschaffenheit sowie Vergilbung untersucht.

### Beispiel 1

a) Zusammensetzung des Härters:
   45 Gew.-Teile 2-Phenylimidazolin
   54 Gew.-Teile Cyanursäure
   1 Gew.-Teil gefällte, hydrophobe Kieselsäure (Sipernat D17 von Degussa)
b) Zusammensetzung des Pulverlacks:
   42 Gew.-Teile Epoxidharz DER663U (v. Dow)
   9 Gew.-Teile Epoxidharz/Verlaufhilfsmittel XB3032 (v. Ciba-Geigy)
   4,1 Gew.-Teile Härtergemisch
   2 Gew.-Teile PE-Wachs (Ceridust 9615 A v. Hoechst)
   28 Gew.-Teile Pigment (TiO₂ R-TC)
   14,9 Gew.-Teile Füllstoff (Durcal 5)
c) Eigenschaften des Mattlacks:
   - Glanzgrad (60°C): (10 min. 200°C): 15 (nach Gardner) : (10 min. 180°C): 19
   - Erichsentiefung: 5,0/4,5 mm (DIN 53 156)
   - optische Prüfung: glatter, gleichmäßiger Belag; keine Vergilbung

### Beispiel 2

a) Zusammensetzung des Härters:
   35 Gew.-Teile 2-Phenylimidazolin
   64 Gew.-Teile Cyanursäure
   1 Gew.-Teil gefällte, hydrophobe Kieselsäure (Sipernat D17 von Degussa)
b) Zusammensetzung des Pulverlacks:
   Die Zusammensetzung des Pulverlacks entspricht Beispiel 1, jedoch wurde eine Härterzusammensetzung nach Beispiel 2a) verwendet.
c) Eigenschaften des Mattlacks:
   - Glanzgrad (60°C): (10 min. 200°C): 4,0 (nach Gardner) : (10 min. 180°C): 4,5
   - Erichsentiefung: 2,5 mm (DIN 53 156)
   - optische Prüfung: glatter, gleichmäßiger Belag; keine Vergilbung

### Beispiel 3

a) Zusammensetzung des Härters:
   44 Gew.-Teile 2-Phenylimidazolin
   53 Gew.-Teile Cyanursäure
   1 Gew.-Teil Zinkstearat (Zincum 5 von Bärlocher)
   1 Gew.-Teil gefällte, hydrophobe Kieselsäure (Sipernat D17 von Degussa)
   1 Gew.-Teil Polyethylenwachs (PE520 v. Hoechst)
b) Zusammensetzung des Pulverlacks:
   Die Zusammensetzung des Pulverlacks entspricht Beispiel 1, jedoch wurde eine Härterzusammensetzung nach Beispiel 3a) verwendet.
c) Eigenschaften des Mattlacks:
   - Glanzgrad (60°C): (10 min. 200°C): 5,3 (nach Gardner) : (10 min. 180°C): 5,4
   - Erichsentiefung: 3,0 mm
   - optische Prüfung: glatter, gleichmäßiger Belag; keine Vergilbung

### Beispiel 4

a) Zusammensetzung des Härters:
   45 Gew.-Teile 1,4-Bis(2-imidazolinyl)benzol
   54 Gew.-Teile Cyanursäure
   1 Gew.-Teil gefällte, hydrophobe Kieselsäure (Sipernat D17 von Degussa)
b) Zusammensetzung des Pulverlacks:
   identisch zu Beispiel 1
c) Eigenschaften des Mattlacks:
   - Glanzgrad (60°C): (10 min. 200°C): 40 (nach Gardner) : (10 min. 180°C): 40
   - Erichsentiefung: 0,8 mm
   - optische Prüfung: glatter, gleichmäßiger Belag; keine Vergilbung

### Beispiel 5

a) Zusammensetzung des Härters:
   45 Gew.-Teile 1,3-Bis(2-imidazolinyl)benzol
   54 Gew.-Teile Cyanursäure
   1 Gew.-Teil gefällte, hydrophobe Kieselsäure (Sipernat D17 von Degussa)
b) Zusammensetzung des Pulverlacks:
   identisch zu Beispiel 1
c) Eigenschaften des Mattlacks:
   - Glanzgrad (60°C): (10 min. 200°C): 37 (nach Gardner) : (10 min. 180°C): 39
   - Erichsentiefung: 1,1 mm
   - optische Prüfung: glatter, gleichmäßiger Belag; keine Vergilbung

## Patentansprüche (Patentansprüche für folgende(n) Vertragsstaat(en): CH, DE, FR, GB, IT, LI)

1. Härter für die Herstellung von Mattlacken auf Basis von Epoxidharzen,
**dadurch gekennzeichnet,**
daß er aus einer Mischung von
a) 2-Imidazolin-Derivat mit einem Schmelzpunkt > 60°C und b) Cyanursäure sowie gegebenenfalls Antibackmittel oder/und Stabilisator besteht.

2. Härter nach Anspruch 1,
**dadurch gekennzeichnet,**
daß das 2-Imidazolin-Derivat eine Verbindung der allgemeinen Formel I ist, 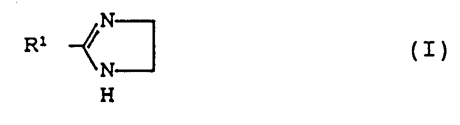 in der R¹ = ein Alkylrest mit 10 bis 20 Kohlenstoffatomen, 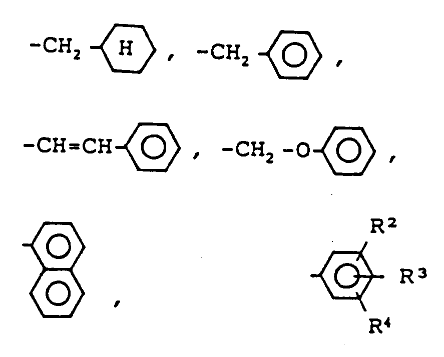 darstellt und R², R³, R⁴ = unabhängig voneinander jeweils H, eine C₁-C₄-Alkylgruppe, -NO₂, -Cl, -OCH₃ oder 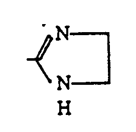 bedeuten.

3. Härter nach den Ansprüchen 1 und 2,
**dadurch gekennzeichnet,**
daß das Gewichtsverhältnis von 2-Imidazolin-Derivat zu Cyanursäure 90:10 bis 20:80 beträgt.

4. Härter nach den Ansprüchen 1 bis 3, **dadurch gekennzeichnet,**
daß er Antibackmittel in einer Menge von 0,2 bis 5 Gew.-%, bezogen auf das Gewicht des Härters, enthält.

5. Härter nach Anspruch 4, **dadurch gekennzeichnet,**
daß er als Antibackmittel pyrogene und/oder gefällte Kieselsäure enthält.

6. Härter nach den Ansprüchen 1 bis 5, **dadurch gekennzeichnet,**
daß er Stabilisatoren in einer Menge von 0,5 bis 5 Gew.-%, bezogen auf das Gewicht des Härters, enthält.

7. Härter nach Anspruch 6, **dadurch gekennzeichnet,**
daß er als Stabilisator Wachs, insbesondere Polyethylenwachs enthält.

8. Härter nach Anspruch 6, **dadurch gekennzeichnet,**
daß er als Stabilisator ein Stearat, vorzugsweise Zinkstearat enthält.

9. Härter nach den Ansprüchen 1 bis 8, **dadurch gekennzeichnet,**
daß seine Teilchen eine Größe von < 100 »m, insbesondere < 50 »m aufweisen.

10. Verfahren zur Härtung von Epoxidharzen unter Herstellung von Mattlacken,
**dadurch gekennzeichnet,**
daß man einen Härter nach einem der Ansprüche 1 bis 9 in einer Menge von 1 bis 30 Gew.-%, bezogen auf das Gewicht der Epoxidharze, einsetzt.

11. Verfahren nach Anspruch 10,
**dadurch gekennzeichnet,** daß man den Härter in einer Menge von 5 bis 20 Gew.-%, bezogen auf das Gewicht der Epoxidharze, verwendet.

12. Verfahren nach den Ansprüchen 10 und 11,
**dadurch gekennzeichnet,** daß man die Härtung bei einer Temperatur zwischen 140°C und 220°C durchführt.

13. Verfahren nach Anspruch 12,
**dadurch gekennzeichnet,** daß man die Härtung bei 180°C bis 200°C vornimmt.

## Patentansprüche (Patentansprüche für folgende(n) Vertragsstaat(en): ES)

1. Verfahren zur Härtung von Epoxidharzen unter Herstellung von Mattlacken,
**dadurch gekennzeichnet,**
daß man einen Härter verwendet, der aus einer Mischung von a) 2-Imidazolin-Derivat mit einem Schmelzpunkt > 60°C und b) Cyanursäure sowie gegebenenfalls Antibackmittel oder/und Stabilisator besteht.

2. Verfahren nach Anspruch 1,
**dadurch gekennzeichnet,**
daß das 2-Imidazolin-Derivat eine Verbindung der allgemeinen Formel I ist, 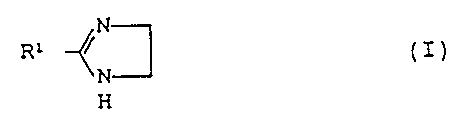 in der R¹ = ein Alkylrest mit 10 bis 20 Kohlenstoffatomen, 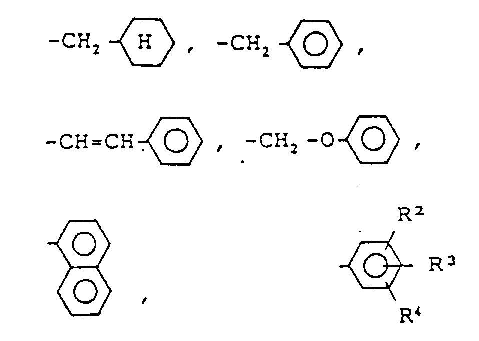 darstellt und R², R³, R⁴ = unabhängig voneinander jeweils H, eine C₁-C₄-Alkylgruppe, -NO₂, -Cl, -OCH₃ oder 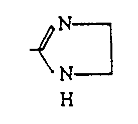 bedeuten.

3. Verfahren nach den Ansprüchen 1 und 2,
**dadurch gekennzeichnet,**
daß das Gewichtsverhältnis von 2-Imidazolin-Derivat zu Cyanursäure 90:10 bis 20:80 beträgt.

4. Verfahren nach den Ansprüchen 1 bis 3,
**dadurch gekennzeichnet,**
daß der Härter Antibackmittel in einer Menge von 0,2 bis 5 Gew.-%, bezogen auf das Gewicht des Härters, enthält.

5. Verfahren nach Anspruch 4,
**dadurch gekennzeichnet,**
daß der Härter als Antibackmittel pyrogene und/oder gefällte Kieselsäure enthält.

6. Verfahren nach den Ansprüchen 1 bis 5,
**dadurch gekennzeichnet,**
daß der Härter Stabilisatoren in einer Menge von 0,5 bis 5 Gew.-%, bezogen auf das Gewicht des Härters, enthält.

7. Verfahren nach Anspruch 6,
**dadurch gekennzeichnet,**
daß der Härter als Stabilisator Wachs, insbesondere Polyethylenwachs enthält.

8. Verfahren nach Anspruch 6,
**dadurch gekennzeichnet,**
daß der Härter als Stabilisator ein Stearat, vorzugsweise Zinkstearat enthält.

9. Verfahren nach den Ansprüchen 1 bis 8,
**dadurch gekennzeichnet,**
daß die Härterteilchen eine Größe von < 100 »m, insbesondere < 50 »m aufweisen.

10. Verfahren nach einem der Ansprüche 1 bis 9,
**dadurch gekennzeichnet,**
daß man den Härter in einer Menge von 1 bis 30 Gew.-%, bezogen auf das Gewicht der Epoxidharze, einsetzt.

11. Verfahren nach Anspruch 10,
**dadurch gekennzeichnet,**
daß man den Härter in einer Menge von 5 bis 20 Gew.-%, bezogen auf das Gewicht der Epoxidharze, verwendet.

12. Verfahren nach den Ansprüchen 10 und 11,
**dadurch gekennzeichnet,**
daß man die Härtung bei einer Temperatur zwischen 140°C und 220°C durchführt.

13. Verfahren nach Anspruch 12,
**dadurch gekennzeichnet,**
daß man die Härtung bei 180°C bis 200°C vornimmt.

## Claims (Claims for the following Contracting State(s): CH, DE, FR, GB, IT, LI)

1. Curing agent for the production of mat coatings based on epoxy resins,
**wherein**
it consists of a mixture of
a) a 2-imidazoline derivative with a melting point of > 60°C and b) cyanuric acid as well as, if desired, anticaking agents or/and stabilizers.

2. Curing agent as claimed in claim 1,
**wherein**
the 2-imidazoline derivative is a compound having the general formula I 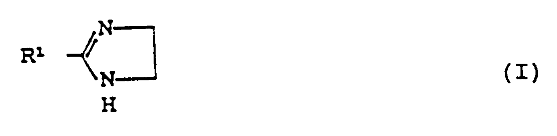 in which R¹ represents an alkyl residue with 10 to 20 carbon atoms, 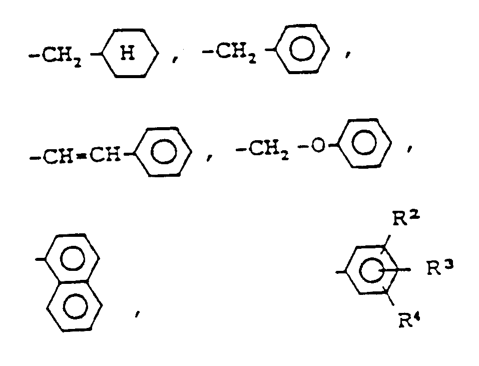 and R², R³, R⁴ each denote independently of one another H, a C₁-C₄ alkyl group, -NO₂, -Cl, -OCH₃ or

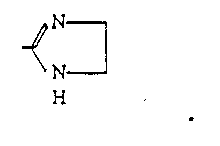

3. Curing agent as claimed in claims 1 and 2,
**wherein**
the ratio by weight of the 2-imidazoline derivative to cyanuric acid is 90:10 to 20:80.

4. Curing agent as claimed in claims 1 to 3,
**wherein**
it contains an anticaking agent in an amount of 0.2 to 5 % by weight in relation to the weight of the curing agent.

5. Curing agent as claimed in claim 4,
**wherein**
it contains pyrogenic and/or precipitated silicic acid as the anticaking agent.

6. Curing agent as claimed in claims 1 to 5,
**wherein**
it contains stabilizers in an amount of 0.5 to 5 % by weight in relation to the weight of the curing agent.

7. Curing agent as claimed in claim 6,
**wherein**
it contains wax, in particular polyethylene wax, as the stabilizer.

8. Curing agent as claimed in claim 6,
**wherein**
it contains a stearate, preferably zinc stearate, as the stabilizer.

9. Curing agent as claimed in claims 1 to 8,
**wherein**
the size of its particles is < 100 »m, in particular < 50 »m.

10. Process for curing epoxy resins in the production of mat coatings,
**wherein**
a curing agent as claimed in one of the claims 1 to 9 is used in an amount of 1 to 30 % by weight in relation to the weight of the epoxy resins.

11. Process as claimed in claim 10,
**wherein**
the curing agent is used in an amount of 5 to 20 % by weight in relation to the weight of the epoxy resins.

12. Process as claimed in claims 10 and 11,
**wherein**
the curing is carried out at a temperature between 140°C and 220°C.

13. Process as claimed in claim 12,
**wherein**
the curing is carried out at 180°C to 200°C.

## Claims (Claims for the following Contracting State(s): ES)

1. Process for curing epoxy resins in the production of mat coatings,
**wherein**
a curing agent is used which consists of a mixture of
a) a 2-imidazoline derivative with a melting point of > 60°C and
b) cyanuric acid as well as, if desired, anticaking agents or/and stabilizers.

2. Process as claimed in claim 1,
**wherein**
the 2-imidazoline derivative is a compound having the general formula I 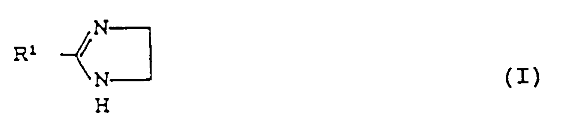 in which R¹ represents an alkyl residue with 10 to 20 carbon atoms, 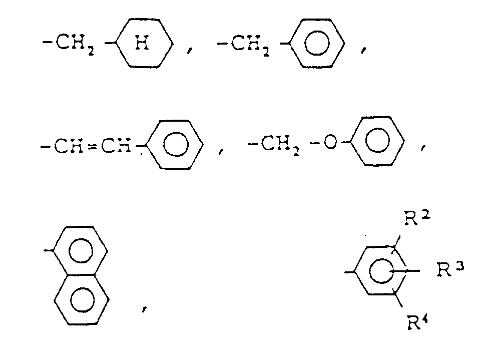 and R², R³, R⁴ each denote independently of one another H, a C₁-C₄ alkyl group, -NO₂, -Cl, -OCH₃ or

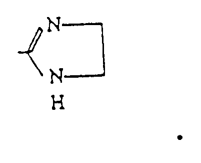

3. Process as claimed in claims 1 and 2,
**wherein**
the ratio by weight of the 2-imidazoline derivative to cyanuric acid is 90:10 to 20:80.

4. Process as claimed in claims 1 to 3,
**wherein**
the curing agent contains an anticaking agent in an amount of 0.2 to 5 % by weight in relation to the weight of the curing agent.

5. Process as claimed in claim 4,
**wherein**
the curing agent contains pyrogenic and/or precipitated silicic acid as the anticaking agent.

6. Process as claimed in claims 1 to 5,
**wherein**
the curing agent contains stabilizers in an amount of 0.5 to 5 % by weight in relation to the weight of the curing agent.

7. Process as claimed in claim 6,
**wherein**
the curing agent contains wax, in particular polyethylene wax, as the stabilizer.

8. Process as claimed in claim 6,
**wherein**
the curing agent contains a stearate, preferably zinc stearate, as the stabilizer.

9. Process as claimed in claims 1 to 8,
**wherein**
the size of the curing agent particles is < 100 »m, in particular < 50 »m.

10. Process as claimed in one of the claims 1 to 9,
**wherein**
the curing agent is used in an amount of 1 to 30 % by weight in relation to the weight of the epoxy resins.

11. Process as claimed in claim 10,
**wherein**
the curing agent is used in an amount of 5 to 20 % by weight in relation to the weight of the epoxy resins.

12. Process as claimed in claims 10 and 11,
**wherein**
the curing is carried out at a temperature between 140°C and 220°C.

13. Process as claimed in claim 12,
**wherein**
the curing is carried out at 180°C to 200°C.

## Revendications (Revendications pour l'(les) Etat(s) contractant(s) suivant(s): CH, DE, FR, GB, IT, LI)

1. Durcisseur pour la préparation de vernis mats à base de résines époxy, caractérisé en ce qu'il consiste en un mélange
a) d'un dérivé de 2-imidazoline d'un point de fusion > 60°C et
b) d'acide cyanurique et éventuellement d'un agent antimottant et/ou d'un stabilisant.

2. Durcisseur selon la revendication 1, caractérisé en ce que le dérivé de 2-imidazoline est un composé de formule générale I 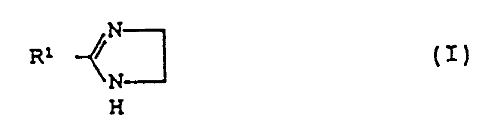 dans laquelle R¹ représente un reste alkyle de 10 à 20 atomes de carbone, 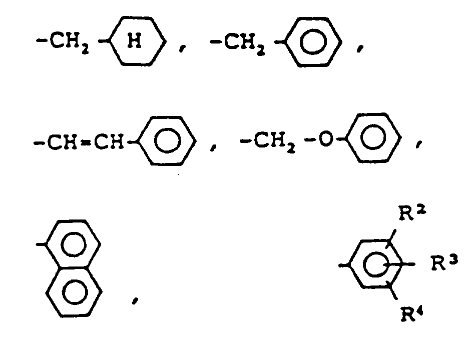 et R², R³, R⁴ représentent chacun indépendamment les uns des autres H, un groupe alkyle en C₁-C₄, -NO₂, -Cl, -OCH₃ ou

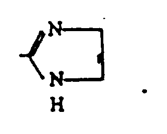

3. Durcisseur selon les revendications 1 et 2, caractérisé en ce que le rapport massique du dérivé de 2-imidazoline à l'acide cyanurique est de 90:10 à 20:80.

4. Durcisseur selon les revendications 1 à 3, caractérisé en ce qu'il contient un agent antimottant en une quantité de 0,2 à 5% en masse par rapport à la masse du durcisseur.

5. Durcisseur selon la revendication 4, caractérisé en ce qu'il contient comme agent antimottant de l'acide silicique pyrogène et/ou précipité.

6. Durcisseur selon les revendications 1 à 5, caractérisé en ce qu'il contient des stabilisants en une quantité de 0,5 à 5% en masse par rapport à la masse du durcisseur.

7. Durcisseur selon la revendication 6, caractérisé en ce qu'il contient comme stabilisant une cire, en particulier une cire de polyéthylène.

8. Durcisseur selon la revendication 6, caractérisé en ce qu'il contient comme stabilisant un stéarate, de préférence le stéarate de zinc.

9. Durcisseur selon les revendications 1 à 8, caractérisé en ce que ses particules ont une taille < 100 »m, en particulier < 50 »m.

10. Procédé pour durcir des résines époxy lors de la préparation de vernis mats, caractérisé en ce que l'on utilise un durcisseur selon l'une des revendications 1 à 9 en une quantité de 1 à 30% en masse par rapport à la masse des résines époxy.

11. Procédé selon la revendication 10, caractérisé en ce que l'on utilise le durcisseur en une quantité de 5 à 20% en masse par rapport à la masse des résines époxy.

12. Procédé selon les revendications 10 et 11, caractérisé en ce que l'on accomplit le durcissement à une température comprise entre 140°C et 220°C.

13. Procédé selon la revendication 12, caractérisé en ce que l'on accomplit le durcissement entre 180°C et 200°C.

## Revendications (Revendications pour l'(les) Etat(s) contractant(s) suivant(s): ES)

1. Procédé de durcissement de résines époxy lors de la préparation de vernis mats, caractérisé en ce que l'on utilise un durcisseur qui consiste en un mélange
a) d'un dérivé de 2-imidazoline d'un point de fusion > 60°C et
b) d'acide cyanurique et éventuellement d'un agent antimottant et/ou d'un stabilisant.

2. Procédé selon la revendication 1, caractérisé en ce que le dérivé de 2-imidazoline est un composé de formule générale I 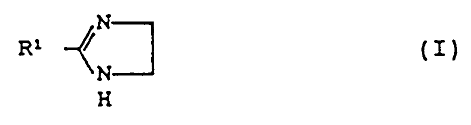 dans laquelle R¹ représente un reste alkyle de 10 à 20 atomes de carbone, 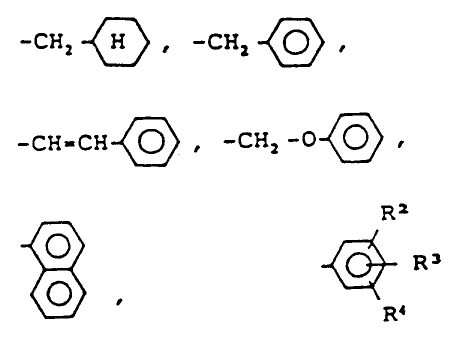 et R², R³, R⁴ représentent chacun indépendamment les uns des autres H, un groupe alkyle en C₁-C₄, -NO₂, -Cl, -OCH₃ ou

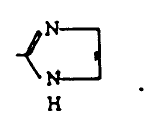

3. Procédé selon les revendications 1 et 2, caractérisé en ce que le rapport massique du dérivé de 2-imidazoline à l'acide cyanurique est de 90:10 à 20:80.

4. Procédé selon les revendications 1 à 3, caractérisé en ce que le durcisseur contient un agent antimottant en une quantité de 0,2 à 5% en masse par rapport à la masse du durcisseur.

5. Procédé selon la revendication 4, caractérisé en ce que le durcisseur contient comme agent antimottant de l'acide silicique pyrogène et/ou précipité.

6. Procédé selon les revendications 1 à 5, caractérisé en ce que le durcisseur contient des stabilisants en une quantité de 0,5 à 5% en masse par rapport à la masse du durcisseur.

7. Procédé selon la revendication 6, caractérisé en ce que le durcisseur contient comme stabilisant une cire, en particulier une cire de polyéthylène.

8. Procédé selon la revendication 6, caractérisé en ce que le durcisseur contient comme stabilisant un stéarate, de préférence le stéarate de zinc.

9. Procédé selon les revendications 1 à 8, caractérisé en ce que les particules ont une taille < 100 »m, en particulier < 50 »m.

10. Procédé selon l'une des revendications 1 à 9, caractérisé en ce que l'on utilise le durcisseur en une quantité de 1 à 30% en masse par rapport à la masse des résines époxy.

11. Procédé selon la revendication 10, caractérisé en ce que l'on utilise le durcisseur en une quantité de 5 à 20% en masse par rapport à la masse des résines époxy.

12. Procédé selon les revendications 10 et 11, caractérisé en ce que l'on accomplit le durcissement à une température comprise entre 140°C et 220°C.

13. Procédé selon la revendication 12, caractérisé en ce que l'on accomplit le durcissement entre 180°C et 200°C.
